# EUROPÄISCHE PATENTANMELDUNG

(11) **EP 1 967 926 A1**
(43) Veröffentlichungstag der Anmeldung: **10.09.2008**
(21) Anmeldenummer: 08400006.6
(22) Anmeldetag: 29.02.2008
(51) Int. Cl.: G05B 19/402, G05B 19/404

(54) **Verfahren und Vorrichtung zur Korrektur eines Positionierungssystems**

(30) Priorität: 03.03.2007 DE 102007011852
(71) Anmelder: AfM Technology GmbH, 73430 Aalen (DE)
(72) Erfinder: Banzhaf, Klaus, 89547 Gerstetten (DE); Hageney, Theo, 73432 Aalen (DE); Meyer, Wolfram, 90518 Altdorf (DE); Bullinger, Alexander, 73432 Aalen (DE); Gall, Christoph, 73457 Essingen (DE)
(74) Vertreter: Reiners, Thomas

(57) **Zusammenfassung**

Die Erfindung betrifft ein Verfahren zur Korrektur eines Positionierungssystems, das mindestens ein Programm für mindestens eine Positionierungsfunktion abarbeitet und eine zugehörige Vorrichtung zur Ausführung des Verfahrens. Erfindungsgemäß wird für ein Positionierungssystem (1, 1') mindestens eine Abweichung der Systemgeometrie (20, 20'), insbesondere eine systematische Abweichung, bei mindestens einer Temperatur erfasst, basierend auf der mindestens einen erfassten Abweichung und der mindestens einen Temperatur wird mindestens ein Referenzabweichungskennfeld erzeugt, das dem Positionierungssystem (1, 1') zugeordnet und gespeichert wird, und für die mindestens eine erfasste Abweichung der Systemgeometrie (20, 20') des Positionierungssystems wird ein temperaturabhängiges Verhalten ermittelt und gespeichert, wobei für den bestimmungsgemäßen Betrieb des Positionierungssystems (1, 1') basierend auf mindestens einer vorgegebenen und/oder aktuell erfassten Temperatur und dem gespeicherten mindestens einen Referenzabweichungskennfeld und dem ermittelten temperaturabhängigen Verhalten mindestens ein Korrekturwert (86.1 bis 86.N, 86.1' bis 86.N') ermittelt wird, der bei der Abarbeitung einer Positionierungsfunktion zur Korrektur der erfassten mindestens einen Abweichung der Systemgeometrie (20, 20') berücksichtigt wird.

## Beschreibung

Die Erfindung betrifft ein Verfahren zur Korrektur eines Positionierungssystems nach dem Oberbegriff des Patentanspruchs 1 und eine korrespondierende Vorrichtung.

Aus dem Stand der Technik sind Vorrichtungen und Verfahren zur Korrektur von Geometriefehlern bei Positionierungssystemen und/oder zur Genauigkeitssteigerung durch numerische Fehlerkorrektur bekannt.

So kommen zur Verbesserung der Bearbeitungsgenauigkeit von Werkzeugmaschinen oder zur Steigerung der Messgenauigkeit von Messgeräten unterschiedliche Verfahren zum Einsatz. Bei Werkzeugmaschinen wird das gefertigte Werkstück auf einem geeigneten Messgerät gemessen. Die dabei festgestellten Abweichungen gegenüber Soll-Daten dienen zur Korrektur der Steuerdaten für die Werkzeugmaschine. Bei Messgeräten wird in einem "Substitutionsverfahren" das durch Kalibrierung bekannte Werkstück, das so genannte Masterteil, an Stelle des zu prüfenden Werkstückes gemessen, und die ermittelten Abweichungen zur Korrektur der später zu messenden Werkstücke herangezogen.

Zur Umsetzung des Substitutionsverfahrens ist es erforderlich, dass das Masterteil dem zu prüfenden Werkstück möglichst ähnlich ist.

Bei besonderen Genauigkeitsanforderungen werden geräteunabhängige Messsysteme eingesetzt. Die dabei gewonnenen Messwerte können gemäß der Offenlegungsschrift DE 196 30 205 A1 zur Positionsnachsteuerung bei Werkzeugmaschinen bzw. gemäß der Patentschrift DE 101 26 753 B4 zur Korrektur der vom Messgerät erzeugten Messwerte verwendet werden. Nachteilig hierbei ist, dass bei den meisten Messverfahren nur eine systematische Fehlerkomponente oder nur wenige systematische Fehlerkomponenten berücksichtigt werden.

Aus der US-Patentanmeldung 2005/0166412 A1 ist ein Koordinatenmessgerät bekannt, welches eine Einrichtung zur Korrektur von mit dem Koordinatenmessgerät gemessenen Koordinatenwerten eines Werkstücks in Abhängigkeit vom Gewicht des Werkstücks aufweist. Es werden Kompensationsparameter ermittelt und in einem Speicher abgelegt, welche die Koordinatenmessfehler charakterisieren, welche bei einem Werkstück mit einem bestimmten Gewicht auftreten. Bei einer späteren Messung eines Werkstücks werden die dem Gewicht des Werkstücks entsprechenden Kompensationsparameter aufgerufen, und die Koordinatenwerte werden entsprechend korrigiert.

Eine vollständige Berücksichtigung von Fehlerkomponenten einer translatorischen Verschiebebewegung in einem kartesischen Koordinatenmessgerät mit drei rechtwinklig zueinander stehenden Achsen ist in Wäldele, F.: "Genauigkeitssteigerungen von Koordinatenmessgeräten durch numerische Fehlerkorrektur", in CNC-Koordinatenmesstechnik, expert verlag 1988, ISBN 3-8169-0220-0, Seite 189 bis 204 beschrieben. Das beschriebene Verfahren basiert auf einem mathematischen Modell, welches das Zusammenwirken von 21 systematischen Fehlerkomponenten eines kartesischen Koordinatenmessgeräts mit 3 Achsen beschreibt. Dieses Modell ist Grundlage für eine numerische, prozessbegleitende Fehlerkorrektur. Es dient zur Berechnung der Geometrieabweichungen des kartesischen Koordinatenmessgeräts und ist unabhängig von der speziellen Bauart des Koordinatenmessgeräts. Es werden Messverfahren zur Ermittlung von 21 Fehlerkomponenten des Koordinatenmessgeräts mit 3 Achsen aufgeführt. Diese Fehlerkomponenten umfassen drei translatorische und drei rotatorische Abweichungen für jeden translatorisch bewegten Verschiebeschlitten sowie zusätzlich drei Rechtwinkligkeitsabweichungen. Zur Berechnung von Korrekturwerten aus den zuvor ermittelten 21 systematischen Fehlerkomponenten ist ein Programm in die Herstellersoftware des Koordinatenmessgeräts implementiert, das beim Einschalten des Koordinatenmessgeräts automatisch in den Rechnerspeicher des Steuerungsrechners eingelesen wird, so dass bei jeder Antastung die Korrekturwerte für die jeweilige Messposition ermittelt und mit den abgelesenen Messwerten verrechnet werden können.

Ebenso wie die Fehlerkomponenten der translatorischen Verschiebebewegung können gemäß VDI/VDE 2617-4: "Genauigkeit von Koordinatenmessgeräten, Kenngrößen und deren Prüfung, Drehtische auf Koordinatenmessgeräten", Beuth Verlag, 1989 auch die Fehlerkomponenten von Drehachsen korrigiert werden.

Die beschriebenen Korrekturverfahren können insbesondere in Positionierungssysteme implementiert werden, die eine entsprechende hardwaremäßige und softwaremäßige Systemarchitektur aufweisen, deren Struktur die Ausführung dieser Korrekturen ermöglichen. Als nachteilig kann angesehen werden, dass die Implementierung der beschriebenen Korrekturverfahren aufgrund des herstellerspezifischen Datenmanagements und der herstellerspezifischen Schnittstellen meist sehr aufwändig ist. In Positionierungssystemen, die keine entsprechende hardwaremäßige und softwaremäßige Systemarchitektur aufweisen, können die beschriebenen Korrekturverfahren nicht implementiert werden.

In der nicht vorveröffentlichten Patentanmeldung DE 10 2007 004 971.6 der Anmelderin werden eine Vorrichtung und ein Verfahren zur Korrektur eines Positionierungssystems beschrieben, deren Offenbarung hiermit durch Bezugnahmen in die Beschreibung aufgenommen wird. Die beschriebene Positionierungssystem umfasst eine Systemsteuereinheit und einen Programmspeicher, in dem mindestens ein Programm für mindestens eine Positionierungsfunktion speicherbar ist, wobei die Systemsteuereinheit über eine Auswerte- und Steuereinheit das mindestens eine gespeicherte Programm zur Abarbeitung in einen Arbeitsspeicher lädt. Eine Konvertiervorrichtung modifiziert ein für mindestens eine Positionierungsfunktion erstelltes Programm durch Einarbeiten von Korrekturwerten in einen Steuercode des Programms und stellt es als systemspezifisches Programm einem vorgegebenen Positionierungssystem zur Verfügung, wobei die Korrekturwerte speziell für das vorgegebene Positionierungssystem ermittelt sind.

Aufgabe der Erfindung ist es, ein Verfahren und eine Vorrichtung zur Korrektur eines Positionierungssystems anzugeben, welche die Genauigkeit von Positionierungsfunktionen verbessern.

Die Erfindung löst diese Aufgabe durch Bereitstellung eines Verfahrens zur Korrektur eines Positionierungssystems mit den Merkmalen des Patentanspruchs 1 und durch eine korrespondierende Vorrichtung mit den Merkmalen des Patentanspruchs 17.

Vorteilhafte Ausführungsformen und Weiterbildungen der Erfindung sind in den abhängigen Ansprüchen angegeben.

Erfindungsgemäß erfasst ein Verfahren zur Korrektur eines Positionierungssystems, das mindestens ein Programm für mindestens eine Positionierungsfunktion abarbeitet, bei mindestens einer Temperatur mindestens eine Abweichung, insbesondere eine systematische Abweichung, einer Systemgeometrie des Positionierungssystems. Basierend auf der mindestens einen erfassten Abweichung und der mindestens einen Temperatur wird mindestens ein Referenzabweichungskennfeld erzeugt, welches dem Positionierungssystem zugeordnet und gespeichert wird. Zudem wird für die mindestens eine erfasste Abweichung der Systemgeometrie des Positionierungssystems ein temperaturabhängiges Verhalten ermittelt und gespeichert. Für den bestimmungsgemäßen Betrieb des Positionierungssystems wird basierend auf mindestens einer vorgegebenen und/oder aktuell erfassten Temperatur und dem gespeicherten mindestens einen Referenzabweichungskennfeld und dem ermittelten temperaturabhängigen Verhalten mindestens ein Korrekturwert ermittelt, der bei der Abarbeitung einer Positionierungsfunktion zur Korrektur der erfassten mindestens einen Abweichung der Systemgeometrie berücksichtigt wird. Da der mindestens eine Korrekturwert in Abhängigkeit von einer vorgegebenen oder aktuell ermittelten Temperatur berechnet wird, können die temperaturabhängigen Abweichungen der Systemgeometrie des Positionierungssystems in vorteilhafter Weise kompensiert werden.

Informationen über das temperaturabhängige Verhalten der mindestens einen erfassten Abweichung der Systemgeometrie des Positionierungssystems können beispielsweise aus bekannten Materialeigenschaften der Systemgeometrie des Positionierungssystems, insbesondere aus den Temperaturverhalten der verwendeten Materialien, ermittelt werden, wobei die Informationen über das temperaturabhängige Verhalten der mindestens einen erfassten Abweichung der Systemgeometrie des Positionierungssystems beispielsweise in Form von Funktionen zur Verfügung gestellt werden können. Zudem können die Informationen über das temperaturabhängige Verhalten der mindestens einen erfassten Abweichung der Systemgeometrie des Positionierungssystems aus mehreren Referenzmessungen gewonnen werden, die bei verschiedenen Temperaturen ausgeführt werden. Die Referenzmessungen zur Ermittlung von Informationen über das temperaturabhängige Verhalten der mindestens einen erfassten Abweichung der Systemgeometrie des Positionierungssystems können beispielsweise an einem Referenzpositionierungssystem einer bestimmten Bauart ausgeführt werden, das beispielsweise in einer Klimakammer verschiedenen Temperaturen ausgesetzt wird, und die ermittelten Informationen über das temperaturabhängige Verhalten der mindestens einen erfassten Abweichung der Systemgeometrie können dann in vorteilhafter Weise auf andere Positionierungssysteme der gleichen Bauart übertragen werden. Für die anderen Positionierungssysteme ist es dann nur erforderlich, die mindestens eine Abweichung der Systemgeometrie bei einer Temperatur zu ermitteln und im Referenzabweichungskennfeld zu speichern. Der mindestens eine Korrekturwert für die mindestens eine Abweichung der Systemgeometrie kann für eine aktuelle Temperatur in Kenntnis des temperaturabhängigen Verhaltens der mindestens einen erfassten Abweichung einfach aus dem Referenzabweichungskennfeld berechnet werden.

In Ausgestaltung des erfindungsgemäßen Verfahrens wird der mindestens eine Korrekturwert basierend auf einer aktuell erfassten Temperatur während des bestimmungsgemäßen Betriebs des Positionierungssystems ermittelt. Um die Bearbeitungszeit zur Ermittelung der Korrekturwerte während des Betriebs des Positionierungssystems zu verkürzen, kann vor dem bestimmungsgemäßen Betriebs des Positionierungssystems der mindestens eine Korrekturwert für mehrere vorgegebene Temperaturen ermittelt und der jeweiligen vorgegebenen Temperatur zugeordnet und gespeichert werden. Zur Auswahl des entsprechenden mindestens einen Korrekturwerts, wird vor dem Betrieb des Positionierungssystems die aktuelle Temperatur ermittelt und der mit der aktuellen Temperatur korrespondierende gespeicherte mindestens eine Korrekturwert wird ausgewählt und bei der Abarbeitung einer Positionierungsfunktion zur Korrektur der erfassten mindestens einen Abweichung der Systemgeometrie berücksichtigt. Entspricht die aktuell ermittelte Temperatur keiner Temperatur, für die mindestens ein Korrekturwert gespeichert ist, dann wird der mindestens eine Korrekturwert ausgewählt und verwendet, dessen zugehörige Temperatur am Besten mit der aktuell ermittelten Temperatur korrespondiert.

In weiterer Ausgestaltung des erfindungsgemäßen Verfahrens wird das temperaturabhängige Verhalten der Systemgeometrie des Positionierungssystems aus einem Temperaturkennfeld abgeleitet, das Temperaturinformationen und Abweichungsinformationen aufweist, die miteinander kombiniert sind. Das Temperaturkennfeld umfasst beispielsweise mehrere Referenzabweichungskennfelder, die jeweils Informationen über eine Temperatur und Informationen über die bei dieser Temperatur erfasste mindestens eine Abweichung der Systemgeometrie des Positionierungssystems aufweisen.

Zusätzlich oder alternativ kann das Temperaturkennfeld mehrere Differenzabweichungskennfelder umfassen, die jeweils Informationen über eine Temperatur und Informationen über eine dieser Temperatur zugeordnete temperaturabhängige Differenzabweichung der erfassten mindestens einen Abweichung aufweisen. Die mehreren Differenzabweichungskennfelder können jeweils aus den mehreren Referenzabweichungskennfeldern berechnet werden, wobei Differenzabweichung für die mindestens eine erfasste Abweichung beispielsweise aus einer Differenz zwischen einem bei einer ersten Temperatur erfassten zugehörigen Abweichungswert und einem zweiten bei einer zweiten Temperatur erfassten zugehörigen Abweichungswert berechnet wird. Die erste Temperatur kann beispielsweise einer Referenztemperatur entsprechen, und die zweite Temperatur kann einer Temperatur entsprechen, die mit der Information über die Temperatur des zugehörigen Differenzabweichungskennfelds korrespondiert.

Zusätzlich oder alternativ kann das Temperaturkennfeld ein Temperaturkennlinienfeld umfassen, das die Informationen über einen temperaturabhängigen Verlauf für die mindestens eine erfasste Abweichung aufweist. Das Temperaturkennlinienfeld kann beispielsweise aus den mehreren Differenzabweichungskennfeldern und/oder aus den mehreren Referenzabweichungskennfeldern berechnet werden.

In weiterer Ausgestaltung des erfindungsgemäßen Verfahrens können die Informationen über den temperaturabhängigen Verlauf für die mindestens eine erfasste Abweichung durch eine Extrapolation und/oder Interpolation eines zugehörigen ersten Abweichungswerts aus einem ersten Referenzabweichungskennfeld, der bei einer ersten Temperatur erfasst wird, und/oder eines zugehörigen zweiten Abweichungswerts aus einem zweiten Referenzabweichungskennfeld gewonnen werden, der bei einer zweiten Temperatur erfasst wird. Alternativ können die Informationen über den temperaturabhängigen Verlauf für die mindestens eine erfasste Abweichung durch eine Extrapolation und/oder Interpolation eines zugehörigen ersten Differenzabweichungswerts aus einem ersten Differenzabweichungskennfeld, der einer erfassten ersten Temperatur zugeordnet ist, und/oder eines zweiten zugehörigen Differenzabweichungswert aus einem zweiten Differenzabweichungskennfeld gewonnen werden, der einer erfassten zweiten Temperatur zugeordnet ist.

Die Informationen über den temperaturabhängigen Verlauf für die mindestens eine erfasste Abweichung können beispielsweise durch eine lineare Interpolation zwischen dem zugehörigen ersten Abweichungswert bzw. Differenzabweichungswert und/oder dem zugehörigen zweiten Abweichungswert bzw. Differenzabweichungswert berechnet werden. Alternativ können die Informationen über den temperaturabhängigen Verlauf für die mindestens eine erfasste Abweichung durch eine Splinefunktion interpoliert werden, die als Stützstellen den zugehörigen ersten Abweichungswert bzw. Differenzabweichungswert und/oder den zugehörigen zweiten Abweichungswert bzw. Differenzabweichungswert verwendet. Als weitere Alternative können die Informationen über den temperaturabhängigen Verlauf für die mindestens eine erfasste Abweichung, die nur aus einem bei einer Temperatur erfassten zugehörigen Abweichungswert bzw. Differenzabweichungswert extrapoliert wird, aus dem Verlauf einer Abweichungsfunktion ausgehend von dem zugehörigen Abweichungswert bzw. Differenzabweichungswert abgeschätzt werden, wobei zur Abschätzung des Verlaufs der Abweichungsfunktion bekannte Materialeigenschaften des Positionierungssystems und/oder Stützstellen verwendet werden können.

In weiterer Ausgestaltung des erfindungsgemäßen Verfahrens wird das Temperaturkennfeld für ein erstes Positionierungssystem einer beliebigen Bauart ermittelt und auf ein zweites Positionierungssystem der gleichen Bauart übertragen. Der mindestens eine Korrekturwert für die Korrektur der mindestens einen Abweichung der Systemgeometrie des zweiten Positionierungssystem wird basierend auf dem mindestens einen Referenzabweichungskennfeld, das für das zweite Positionierungssystem erzeugt wurde, und auf dem Temperaturkennfeld berechnet, das für das erste Positionierungssystem ermittelt wurde. Die Informationen über das temperaturabhängige Verhalten der Systemgeometrie des zweiten Positionierungssystems zur Ermittlung des mindestens einen Korrekturwerts zur Korrektur der mindestens einen Abweichung der Systemgeometrie des zweiten Positionierungssystems wird aus den Informationen über das temperaturabhängige Verhalten der Systemgeometrie des ersten Positionierungssystems sowie aus dem mindestens einen Referenzabweichungskennfeld des zweiten Positionierungssystems gewonnen, wobei die Tatsache ausgenutzt wird, dass im Wesentlichen baugleiche Positionierungssysteme ein nahezu identisches temperaturabhängiges Verhalten aufweisen.

In weiterer Ausgestaltung des erfindungsgemäßen Verfahrens setzt sich eine Temperatur aus mehreren Teiltemperaturen zusammen, die jeweils in einem zugeordneten Bereich des Positionierungssystems erfasst werden. Daher können aus der bei mindestens einer Temperatur erfassten mindestens einen Abweichung der Systemgeometrie des Positionierungssystems bereichsweise zugeordnete Temperaturkennfelder erzeugt und gespeichert werden, so dass der mindestens eine Korrekturwert, der mit der aktuell erfassten Temperatur korrespondiert, für das gesamte Positionierungssystem aus mehreren Bereichstemperaturkennfeldern berechnet werden kann. Alternativ kann aus den bereichsweise erfassten Temperaturen eine Durchschnittstemperatur berechnet werden und als Temperatur für das Positionierungssystem verwendet werden. So kann beispielsweise aus mehreren in mehreren Bereichen des Positionierungssystems erfassten Temperaturwerten ein Temperaturdurchschnittswert für das Positionierungssystem berechnet werden, der als Temperatur des Positionierungssystems verwendet wird.

Um das erfindungsgemäße Korrekturverfahren auch für Positionierungssysteme verwenden zu können, die bauartbedingt keine entsprechende hardwaremäßige und softwaremäßige Systemarchitektur aufweisen, deren Struktur die Ausführung der Korrekturen der Systemgeometrie ermöglichen, kann mindestens ein Programm für mindestens eine Positionierungsfunktion durch Einarbeiten von Korrekturwerten in einen Steuercode des Programms modifiziert und als systemspezifisches Programm einem vorgegebenen Positionierungssystem zur Verfügung gestellt werden. Dies ermöglicht in vorteilhafter Weise, dass unabhängig von der Ausführung des Positionierungssystems eine Korrektur der Abweichungen einer beliebigen Kinematik und deren Freiheitsgrade in kartesischen, zylindrischen oder kugelförmigen Koordinatensystemen sowie beliebigen Kombinationen hiervon durchgeführt werden kann, und somit die Positionierung mindestens eines zu positionierenden Elements durch das Positionierungssystem unter Verwendung der Korrekturwerte optimiert werden kann. So kann beispielsweise der basierend auf einer vorgegebenen Temperatur und dem gespeicherten mindestens einen Referenzabweichungskennfeld und dem ermittelten temperaturabhängigen Verhalten erzeugte mindestens eine Korrekturwert für die Systemgeometrie des Positionierungssystems gezielt in einen Steuercode mindestens eines bereits erstellten Programms eingearbeitet werden und mindestens ein modifiziertes systemspezifisches Programm erzeugt und gespeichert werden. Zusätzlich oder alternativ können in Abhängigkeit von mehreren vorgegebenen Temperaturen mehrere modifizierte systemspezifische Programme erzeugt und gespeichert werden, wobei jedes der mehreren modifizierten systemspezifischen Programme genau einer Temperatur zugeordnet wird. Vor dem Betrieb des Positionierungssystems kann dann eine aktuelle Temperatur ermittelt werden, und ein mit der aktuellen Temperatur korrespondierendes modifiziertes systemspezifisches Programm kann aktiviert und abgearbeitet werden.

Das Positionierungssystem führt beispielsweise mindestens eine Positionierungsfunktion aus, die beispielsweise eine translatorische und/oder drehende Positionierungsbewegung mit mindestens einem zu positionierenden Element über mindestens eine translatorische Positionierungsachse und/oder über mindestens eine drehende Positionierungsachse innerhalb eines vorgegebenen Bezugssystems umfasst. Das mindestens eine zu positionierende Element kann in Abhängigkeit von der Verwendung des Positionierungssystems als Werkzeug und/oder Werkstück und/oder Messwertaufnehmer und/oder Prüfling und/oder Bestückungseinheit und/oder zu bestückende Einheit und/oder Aufnehmerelement und/oder Ablageelement ausgeführt werden. So kann die Positionierungsfunktion beispielsweise zwei relativ zu einander zu positionierende Elemente, wie z.B. ein Werkzeug und ein Werkstück in einer Werkzeugmaschine, einen Messwertaufnehmer und einen Prüfling in einem Messsystem usw., relativ zueinander bewegen. Die Positionierungsfunktion verändert beispielsweise die Position eines ersten zu positionierenden Elements, z.B. des Werkzeugs bzw. des Messwertaufnehmers, und lässt die Position eines zweiten Elements, z.B. des Werkstücks bzw. des Prüflings, unverändert. Alternativ lässt die Positionierungsfunktion die Position des ersten zu positionierenden Elements, z.B. des Werkzeugs bzw. des Messwertaufnehmers, unverändert, verändert wertaufnehmers, unverändert, verändert aber die Position des zweiten Elements, z.B. des Werkstücks bzw. des Prüflings. Bei einer weiteren alternativen Ausführungsform kann die Positionierungsfunktion sowohl die Position des ersten zu positionierenden Elements, z.B. des Werkzeugs bzw. des Messwertaufnehmers, als auch die Position des zweiten Elements, z.B. des Werkstücks bzw. des Prüflings, verändern.

In Ausgestaltung des erfindungsgemäßen Verfahrens werden beispielsweise die Abweichungen für mindestens eine translatorische Positionierungsachse ermittelt, wobei die Abweichungen translatorische Abweichungen in mindestens einer Bezugsrichtung und/oder rotatorische Abweichungen um mindestens eine Bezugsrichtung umfassen. Zudem kann eine Rechtwinkligkeitsabweichung von jeweils zwei Positionierungsachsen zu einander ermittelt werden, wenn die Systemgeometrie von mindestens zwei Positionierungsachsen bestimmt wird.

Zusätzlich oder alternativ können die Abweichungen für mindestens eine drehende Positionierungsachse ermittelt werden. Hierbei können die Abweichungen jeweils eine Winkelabweichung, eine Radialabweichung, die durch Radialbewegungen der entsprechenden drehenden Positionierungsachse verursacht wird, eine Axialabweichung, die durch Axialbewegungen der entsprechenden drehenden Positionierungsachse verursacht wird, und/oder eine Taumelabweichung umfassen, die durch Taumelbewegungen der entsprechenden drehenden Positionierungsachse verursacht wird. Außerdem kann eine temperaturbedingte Abweichung der Achslage ermittelt werden. Zudem kann die Position der mindestens einen translatorischen Positionierungsachse und/oder der mindestens einen drehenden Positionierungsachse im Bezugssystem ermittelt werden. Als Bezugsystem kann beispielsweise ein kartesisches Koordinatensystem vorgegeben werden. Hierbei repräsentiert die mindestens eine Bezugsachse dann eine x-Achse und/oder eine y-Achse und/oder eine z-Achse des vorgegebenen kartesischen Koordinatensystems.

Des Weiteren kann eine seitlich zu einer Positionierungsachse "auskragende" Offsetlänge eines Werkzeugs oder eines Messwertaufnehmers bzw. eines Messwerttasters bei der Ermittlung der Korrekturwerte berücksichtigt werden. Die Offsetlänge repräsentiert beispielsweise die Länge des mindestens einen zu positionierenden Elements, vorzugsweise die Länge des Werkzeugs und/oder eines Werkstücks und/oder des Messwertaufnehmers und/oder einer Bestückungseinheit und/oder eines Aufnehmerelements.

Die erfindungsgemäße Vorrichtung zur Korrektur eines Positionierungssystems, das eine Systemsteuereinheit und einen Programmspeicher umfasst, in dem mindestens ein Programm für mindestens eine Positionierungsfunktion gespeichert ist, wobei die Systemsteuereinheit das mindestens eine gespeicherte Programm zur Abarbeitung in einen Arbeitsspeicher lädt, umfasst Messmittel, die ausgeführt sind, um mindestens eine Abweichung der Systemgeometrie, insbesondere eine systematische Abweichung, bei mindestens einer Temperatur zu erfassen, mindestens eine Sensoreinheit, die ausgeführt ist, um mindestens einen Parameter zur Bestimmung einer Temperatur zu erfassen, eine Auswerte- und Steuereinheit, die ausgeführt ist, um aus der mindestens einen bei mindestens einer Temperatur erfassten Abweichung mindestens ein dem Positionierungssystem zugeordnetes Referenzabweichungskennfeld zu erzeugen, das erzeugte Referenzabweichungskennfeld dem Positionierungssystem zuzuordnen und zu speichern, und eine Korrektureinheit, die ausgeführt ist, um für den bestimmungsgemäßen Betrieb des Positionierungssystems basierend auf mindestens einer vorgegebenen und/oder aktuell erfassten Temperatur und dem gespeicherten mindestens einen Referenzabweichungskennfeld und einem ermittelten temperaturabhängigen Verhalten der mindestens einen Abweichung mindestens einen Korrekturwert zu ermitteln, den die Systemsteuereinheit bei der Abarbeitung einer Positionierungsfunktion zur Korrektur der mindestens einen Abweichung der Systemgeometrie des Positionierungssystems berücksichtigt.

In Abhängigkeit von der Ausführung des Positionierungssystems ergeben sich unterschiedliche Abweichungen, die zu Erzeugung der zugehörigen Korrekturwerte ermittelt werden. Zur Ermittlung der systematischen Abweichungen des Positionierungssystems umfassen die Messmittel beispielsweise ein Laserinterferometer mit speziellen Optionen, geometrische Normale, Kugelplatten und/oder spezielle Laser-Tracer.

In Ausgestaltung der erfindungsgemäßen Vorrichtung leiten die Auswerte- und Steuereinheit und/oder die Korrektureinheit das temperaturabhängige Verhalten der Systemgeometrie des Positionierungssystems aus einem Temperaturkennfeld ab, das Temperaturinformationen und Abweichungsinformationen aufweist, die miteinander kombiniert sind. Das Temperaturkennfeld umfasst, wie oben bereits ausgeführt ist, beispielsweise mehrere Referenzabweichungskennfelder und/oder mehrere Differenzabweichungskennfelder und/oder ein Temperaturkennlinienfeld, die jeweils Informationen über einer Temperatur und Informationen über die bei dieser Temperatur erfasste mindestens eine Abweichung der Systemgeometrie des Positionierungssystems aufweisen. Die mehreren Differenzabweichungskennfelder und/oder das Temperaturkennlinienfeld können von der Auswerte- und Steuereinheit und/oder der Korrektureinheit berechnet werden.

In weiterer Ausgestaltung der erfindungsgemäßen Vorrichtung arbeitet eine Konvertiervorrichtung den erzeugten mindestens einen Korrekturwert zur Korrektur der Systemgeometrie des Positionierungssystems gezielt in einen Steuercode mindestens eines bereits erstellten Programms ein und erzeugt und speichert mindestens ein modifiziertes systemspezifisches Programm, das die Systemsteuereinheit abarbeitet. In Abhängigkeit von mehreren vorgegebenen Temperaturen kann die Konvertiervorrichtung mehrere modifizierte systemspezifische Programme erzeugen und speichern, wobei die Konvertiervorrichtung jedes der mehreren modifizierten systemspezifischen Programme genau einer Temperatur zuordnet. Vor dem Betrieb des Positionierungssystems wird dann eine aktuelle Temperatur ermittelt und die Konvertiervorrichtung stellt der Systemsteuereinheit des Positionierungssystems ein mit der ermittelten aktuellen Temperatur korrespondierendes modifiziertes systemspezifisches Programm zur Abarbeitung zur Verfügung.

Die vorliegende Erfindung kann in vorteilhafter Weise zur Erzeugung von Korrekturwerten und zur Einarbeitung der erzeugten Korrekturwerte in Programme zur Steuerung von Positionierungssystemen eingesetzt werden, deren Systemsteuereinheiten keine Korrektur beliebiger Fehlerfreiheitsgrade in kartesischen, zylindrischen oder kugelförmigen Koordinatensystemen sowie beliebigen Kombinationen hiervon zulassen oder nicht vorsehen, ohne hardwaremäßige Veränderungen an den vorgegebenen Positionierungssystemen oder an den Systemsteuereinheiten vorzunehmen. Das Positionierungssystem ist beispielsweise Teil eines Messsystems und/oder einer Werkzeugmaschine und/oder eines Bestückungssystems und/oder eines Handhabungsgerätes und/oder eines Roboters.

Weitere vorteilhafte Ausgestaltungen und Weiterbildungen der Erfindung ergeben sich aus den restlichen Unteransprüchen, deren Wortlaut hiermit durch Bezugnahme in die Beschreibung aufgenommen wird, um unnötige Textwiederholungen zu vermeiden.

Vorteilhafte, nachfolgend beschriebene Ausführungsformen der Erfindung sind in den Zeichnungen dargestellt.

Dabei zeigen:
- Fig. 1 bis 5: Blockdiagramme zur Beschreibung eines erfindungsgemäßen Verfahrens zur Korrektur von Abweichungen eines Positionierungssystems,
- Fig. 6: ein Blockdiagramm eines ersten Ausführungsbeispiels eines Positionierungssystems,
- Fig. 7: ein Blockdiagramm eines zweiten Ausführungsbeispiels eines Positionierungssystems,
- Fig. 8 bis 10: jeweils ein schematisches Diagramm zur Darstellung von Fehlerparametern einer translatorischen Positionierungsachse, und
- Fig. 11 bis 13: jeweils ein schematisches Diagramm zur Darstellung von Fehlerparametern einer drehenden Positionierungsachse.

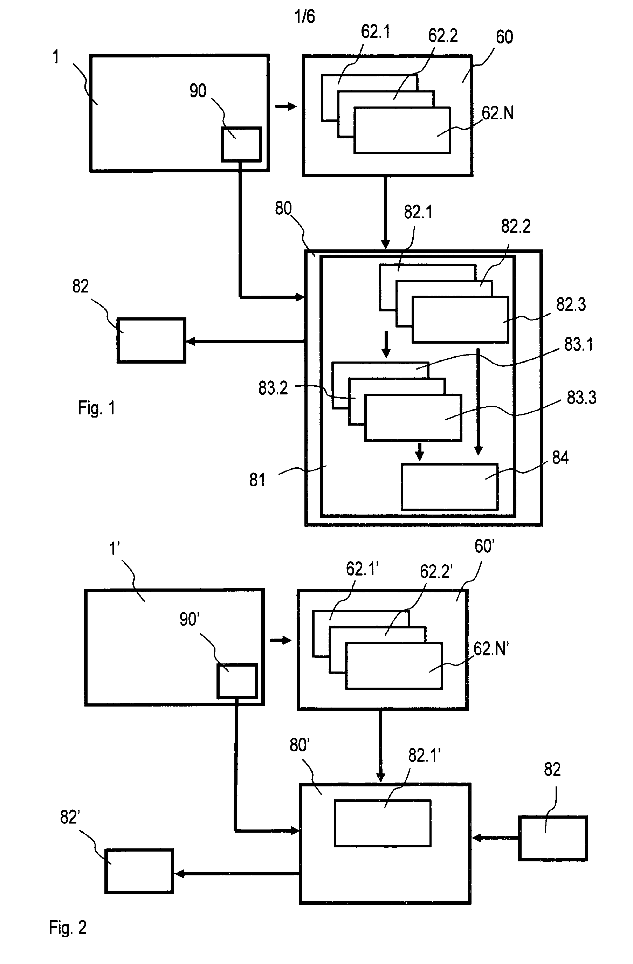

Wie aus Fig. 1 ersichtlich ist, erfasst ein erfindungsgemäßes Verfahren zur Korrektur eines Positionierungssystems 1, das mindestens ein Programm für mindestens eine Positionierungsfunktion abarbeitet, über entsprechende Messmittel 60 bei mindestens einer Temperatur mindestens eine Abweichung 62.1 bis 62.N einer Systemgeometrie des Positionierungssystems 1. Eine aktuelle Temperatur wird dabei über eine Sensoreinheit 90 ermittelt, die beispielsweise einen aktuellen Temperaturwert zur Bestimmung der aktuellen Temperatur erfasst und an eine Auswerte- und Steuereinheit 80 überträgt. Basierend auf der erfassten mindestens einen Abweichung 62.1 bis 62.N, insbesondere einer systematischen Abweichung, und der zugehörigen mindestens einen Temperatur erzeugt die Auswerte- und Steuereinheit 80 mindestens ein der jeweiligen Temperatur zugeordnetes Referenzabweichungskennfeld 82.1, 82.2, 82.3.

Im dargestellten Ausführungsbeispiel werden beispielsweise drei Referenzabweichungskennfelder 82.1, 82.2, 82.3 für die mindestens eine Abweichung 62.1 bis 62.N erzeugt, die bei drei verschiedenen Temperaturen, beispielsweise bei einer Temperatur von 20°C, 25°C bzw. 30°C, erfasst werden. Somit ordnet die Auswerte- und Steuereinheit 80 das erste Referenzabweichungskennfeld 82.1 der ersten Temperatur von z.B. 20°C zu, ordnet das zweite Referenzabweichungskennfeld 82.2 der zweiten Temperatur von z.B. 25°C zu und ordnet das dritte Referenzabweichungskennfeld 82.3 der dritten Temperatur von z.B. 30°C zu. Im ersten Referenzabweichungskennfeld wird somit für jede der erfassten mindestens einen Abweichung 62.1 bis 62.N ein Abweichungswert gespeichert, der bei der zugehörigen Temperatur von den Messmitteln 60 erfasst wird. Zur Vereinfachung der Beschreibung werden hier nur drei verschiedene Temperaturwerte angegeben, die eine Differenz von ca. 5°C zueinander aufweisen. Es versteht sich, dass die Abweichungen der Systemgeometrie des Positionierungssystems 1 auch bei mehr oder weniger Temperaturwerten erfasst werden können. Zudem kann die Differenz zwischen den verschiedenen Temperaturwerten auch einen kleineren oder größeren Wert als 5°C aufweisen, z.B. 2°C, 3°C, 4°C usw.

Wie weiter aus Fig. 1 ersichtlich ist, sind die Referenzabweichungskennfelder 82.1, 82.2, 82.3 Teil eines Temperaturkennfelds 81, aus dem ein temperaturabhängiges Verhalten der mindestens einen erfassten Abweichung 62.1 bis 62.N der Systemgeometrie des Positionierungssystems 1 abgeleitet werden kann. Das Temperaturkennfeld 81 wird von der Auswerte- und Steuereinheit 80 in einer Speichereinheit 82 gespeichert. Wie weiter aus Fig. 1 ersichtlich ist, kann das Temperaturkennfeld 81 mehrere Differenzabweichungskennfelder 83.1, 83.2, 83.3, die jeweils Informationen über eine Temperatur und Informationen über eine dieser Temperatur zugeordnete temperaturabhängige Differenzabweichung der erfassten mindestens einen Abweichung 62.1 bis 62.N aufweisen, und/oder ein Temperaturkennlinienfeld 84 umfassen, das die Informationen über einen temperaturabhängigen Verlauf für die mindestens eine erfasste Abweichung 62.1 bis 62.N aufweist.

Die mehreren Differenzabweichungskennfelder 83.1, 83.2, 83.3 können von der Auswerte- und Steuereinheit 80 jeweils aus den mehreren Referenzabweichungskennfeldern 82.1, 82.2, 82.3 berechnet werden. Die Differenzabweichung für die mindestens eine erfasste Abweichung 62.1 bis 62.N wird aus einer Differenz zwischen einem bei einer ersten Temperatur erfassten zugehörigen Abweichungswert und einem zweiten bei einer zweiten Temperatur erfassten zugehörigen Abweichungswert berechnet. Die erste Temperatur entspricht beispielsweise einer Referenztemperatur, und die zweite Temperatur entspricht einer Temperatur, die mit der Information über die Temperatur des zugehörigen Differenzabweichungskennfelds korrespondiert. Das bedeutet, dass alle Differenzabweichungswerte auf den Abweichungswert bezogen sind, welcher bei der Referenztemperatur erfasst wird. Daher weist der Differenzabweichungswert für die mindestens eine Abweichung im Differenzabweichungskennfeld, das der Referenztemperatur zugeordnet ist, beispielsweise den Wert 0 auf.

Das Temperaturkennlinienfeld 84 kann aus den mehreren Differenzabweichungskennfeldern 83.1, 83.2, 83.3 und/oder aus den mehreren Referenzabweichungskennfeldern 82.1, 82.2, 82.3 berechnet werden. Das Temperaturkennlinienfeld 84 weist beispielsweise für jede der erfassten mindestens einen Abweichung 62.1 bis 62.N eine Abweichungsfunktion auf, die durch eine Extrapolation und/oder Interpolation eines zugehörigen ersten Abweichungswerts aus einem ersten Referenzabweichungskennfeld, der bei einer ersten Temperatur erfasst wird, und/oder eines zugehörigen zweiten Abweichungswerts aus einem zweiten Referenzabweichungskennfeld ermittelt wird, der bei einer zweiten Temperatur erfasst wird. In den Referenzabweichungskennfeldern 82.1, 82.2, 82.3 ist beispielsweise jeweils ein Abweichungswert für die mindestens eine Abweichung 62.1 bis 62.N für verschiedene erfasste Temperaturen gespeichert, beispielsweise für die Temperaturen 20°C, 25°C und 30°C. Die Abweichungswerte für die mindestens eine Abweichung 62.1 bis 62.N bei anderen Temperaturen, die zwischen den erfassten Temperaturen liegen werden dann interpoliert. Der Abweichungswert für die mindestens eine Abweichung 62.1 bis 62.N für eine Temperatur von 23°C wird beispielsweise aus dem Abweichungswert bei 20°C und dem Abweichungswert bei 25°C interpoliert. Die Abweichungswerte für die mindestens eine Abweichung 62.1 bis 62.N bei anderen Temperaturen, die außerhalb des Bereichs der erfassten Temperaturen liegen werden dann ausgehend von der nächstliegenden Temperatur extrapoliert. Der Abweichungswert für die mindestens eine Abweichung 62.1 bis 62.N für eine Temperatur von 18°C wird beispielsweise aus dem Abweichungswert bei 20°C extrapoliert. Der Abweichungswert für die mindestens eine Abweichung 62.1 bis 62.N für eine Temperatur von 32°C wird beispielsweise aus dem Abweichungswert bei 30°C extrapoliert.

Zusätzlich oder alternativ kann die Abweichungsfunktion für die erfasste mindestens eine Abweichung 62.1 bis 62.N durch eine Extrapolation und/oder Interpolation eines zugehörigen ersten Differenzabweichungswerts aus einem ersten Differenzabweichungskennfeld, der einer erfassten ersten Temperatur zugeordnet ist, und/oder eines zweiten zugehörigen Differenzabweichungswert aus einem zweiten Differenzabweichungskennfeld ermittelt werden, der einer erfassten zweiten Temperatur zugeordnet ist. Die für jede der mindestens einen Abweichung 62.1 bis 62.N ermittelte Abweichungsfunktion repräsentiert somit den temperaturabhängigen Verlauf für die mindestens eine erfasste Abweichung 62.1 bis 62.N innerhalb eines vorgegebenen Bereichs.

Die Abweichungsfunktion kann beispielsweise durch eine lineare Interpolation zwischen dem zugehörigen ersten Abweichungswert bzw. Differenzabweichungswert und/oder dem zugehörigen zweiten Abweichungswert bzw. Differenzabweichungswert ermittelt werden. Zusätzlich oder alternativ kann die Abweichungsfunktion für die mindestens eine erfasste Abweichung 62.1 bis 62.N durch eine Polynomfunktion oder eine Splinefunktion interpoliert werden, die als Stützstellen den zugehörigen ersten Abweichungswert bzw. Differenzabweichungswert und/oder den zugehörigen zweiten Abweichungswert bzw. Differenzabweichungswert verwenden. Zudem kann der Verlauf der Abweichungsfunktion für die mindestens eine erfasste Abweichung 62.1 bis 62.N, die nur aus einem bei einer Temperatur erfassten zugehörigen Abweichungswert bzw. Differenzabweichungswert extrapoliert wird, aus einem bekannten Verlauf der Abweichungsfunktion im vorgegebenen Bereich ausgehend von dem zugehörigen Abweichungswert bzw. Differenzabweichungswert abgeschätzt werden, wobei zur Abschätzung des Verlaufs der Abweichungsfunktion bekannte Materialeigenschaften des Positionierungssystems und/oder Stützstellen verwendet werden können.

Das Positionierungssystems 1 repräsentiert im dargestellten Ausführungsbeispiel ein Referenzpositionierungssystem für Positionierungssysteme einer beliebigen Bauart, für welches das Temperaturkennfeld 81 von der Auswerte- und Steuereinheit 80 erzeugt wird. Das Temperaturkennfeld 81 kann dann zur Ermittlung bzw. Weitergabe von Informationen über das temperaturabhängige Verhalten der erfassten mindestens einen Abweichung 62.1 bis 62.N über die Speichereinheit 82 auf andere Positionierungssysteme 1' der gleichen Bauart übertragen werden.

Wie aus Fig. 2 ersichtlich ist, kann das für das Referenzpositionierungssystem erzeugte Temperaturkennfeld 81 über die Speichereinheit 82 auf ein zweites Positionierungssystem 1' der gleichen Bauart übertragen werden. Eine Auswerte- und Steuereinheit 80', die ähnlich wie die Auswerte- und Steuereinheit 80 aufgebaut ist, erzeugt basierend auf mindestens einer Abweichung 62.1' bis 62.N' und einer erfassten Temperatur ein Referenzabweichungskennfeld 82.1', und ordnet das erzeugte Referenzabweichungskennfeld 82.1' dem zweiten Positionierungssystem zu. Die mindestens eine Abweichung 62.1' bis 62.N' wird von Messmitteln 60' bei einer Temperatur erfasst, die über eine Sensoreinheit 90' erfasst wird. Die Auswerte-und Steuereinheit 80' speichert das erzeugte Referenzabweichungskennfeld 82.1' in einer Speichereinheit 82'.

Zusätzlich kann die Auswerte- und Steuereinheit 80' das für das Referenzpositionierungssystem 1 erzeugte Temperaturfeld 81 in der Speichereinheit 82' abspeichern. Außerdem ist es beispielsweise möglich, dass die Auswerte- und Steuereinheit 80' anstelle der Auswerte- und Steuereinheit 80 in Abhängigkeit vom Inhalt des Temperaturkennfelds 81 die mehreren Differenzabweichungskennfelder 83.1, 83.2, 83.3 aus den mehreren Referenzabweichungskennfeldern 82.1, 82.2, 82.3 bzw. das 'Temperaturkennlinienfeld 84 aus den mehreren Differenzabweichungskennfelder 83.1, 83.2, 83.3 und/oder aus den mehreren Referenzabweichungskennfeldern 82.1, 82.2, 82.3 berechnet, so dass die Auswerte- und Steuereinheit 80' das temperaturabhängige Verhalten der mindestens einen Abweichung der Systemgeometrie ermittelt, wobei die Berechnung auf die oben unter Bezugnahme auf Fig. 1 beschriebene Weise erfolgt.

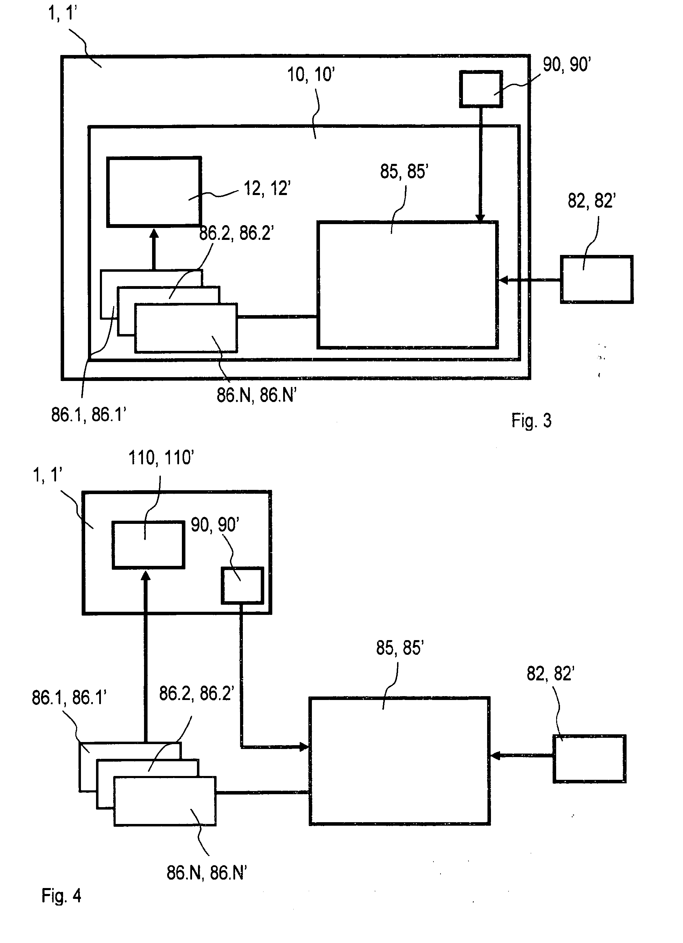

Da die nachfolgend beschriebenen Funktionsweisen bzw. Komponenten für das in Fig. 1 dargestellte Positionierungssystem 1 und für das in Fig. 2 dargestellte Positionierungssystem 1' im Wesentlichen gleich sind, sind in den nachfolgenden Fig. 3 bis 13 jeweils die Komponenten für beide Positionierungssysteme 1 und 1' dargestellt.

Wie aus Fig. 3 und 4 ersichtlich ist, ermittelt eine Korrektureinheit 85, 85' basierend auf mindestens einer vorgegebenen und/oder aktuell erfassten Temperatur und dem gespeicherten mindestens einen Referenzabweichungskennfeld 82.1', 82.1, 82.2, 82.3 und dem ermittelten temperaturabhängigen Verhalten mindestens einen Korrekturwert 86.1 bis 86.N, 86.1' bis 86.N', der bei der Abarbeitung einer Positionierungsfunktion zur Korrektur der erfassten mindestens einen Abweichung 62.1 bis 62.N, 62.1' bis 62.N' der Systemgeometrie 20, 20' des Positionierungssystems 1 bzw. 1' berücksichtigt wird. Das mindestens eine Referenzabweichungskennfeld 82.1', 82.1, 82.2, 82.3 und das ermittelte temperaturabhängige Verhalten können der Korrektureinheit 85, 85' beispielsweise über die Speichereinheit 82, 82' zur Verfügung gestellt werden. Außerdem ist es beispielsweise möglich, dass die Korrektureinheit 85, 85' anstelle der Auswerte- und Steuereinheit 80 bzw. 80' in Abhängigkeit vom Inhalt des Temperaturkennfelds 81 die mehreren Differenzabweichungskennfelder 83.1, 83.2, 83.3 aus den mehreren Referenzabweichungskennfeldern 82.1, 82.2, 82.3 bzw. das Temperaturkennlinienfeld 84 aus den mehreren Differenzabweichungskennfelder 83.1, 83.2, 83.3 und/oder aus den mehreren Referenzabweichungskennfeldern 82.1, 82.2, 82.3 berechnet, so dass die Korrektureinheit 85, 85' das temperaturabhängige Verhalten der mindestens einen Abweichung der Systemgeometrie ermittelt, wobei die Berechnung auf die oben unter Bezugnahme auf Fig. 1 beschriebene Weise erfolgt. Der Unterschied zwischen der ersten Ausführungsform gemäß Fig. 3 und der zweiten Ausführungsform gemäß Fig. 4 besteht darin, dass die Funktionalität der Korrektureinheit 85, 85' zur Erzeugung des mindestens einen Korrekturwerts 86.1 bis 86.N, 86.1' bis 86.N' bzw. die Korrektureinheit 85, 85' bei der ersten Ausführungsform gemäß Fig. 3 direkt in eine Systemsteuereinheit 10, 10' des Positionierungssystems 1 bzw. 1' implementiert ist. Bei der zweiten Ausführungsform gemäß Fig. 4 ist die Korrektureinheit 85, 85' zur Erzeugung des mindestens einen Korrekturwerts 86.1 bis 86.N, 86.1' bis 86.N' als eigenständige Baugruppe ausgeführt.

Die Korrektureinheit 85, 85' erzeugt den mindestens einen Korrekturwert 86.1 bis 86.N, 86.1' bis 86.N' beispielsweise während des bestimmungsgemäßen Betriebs des Positionierungssystems 1, 1' basierend auf einer aktuellen Temperatur, die über die Sensoreinheit 90, 90' ermittelt wird. Alternativ kann die Korrektureinheit 85, 85' den mindestens einen Korrekturwert 86.1 bis 86.N, 86.1' bis 86.N' basierend auf mindestens einer vorgegebenen Temperatur vor dem bestimmungsgemäßen Betrieb des Positionierungssystems 1, 1' ermitteln, wobei der mindestens eine Korrekturwert 86.1 bis 86.N, 86.1' bis 86.N' vorzugsweise für mehrere vorgegebene Temperaturen ermittelt wird, wobei der ermittelte mindestens eine Korrekturwert 86.1 bis 86.N, 86.1' bis 86.N' der jeweiligen vorgegebenen Temperatur zugeordnet und gespeichert wird. Während des Betriebs des Positionierungssystems 1, 1' ermittelt die Korrektureinheit 85, 85' dann eine aktuellen Temperatur über die Sensoreinheit 90, 90' und wählt den mindesten einen Korrekturwert 86.1 bis 86.N, 86.1' bis 86.N' aus, dessen zugeordnete Temperatur am Besten mit der ermittelten aktuellen Temperatur korrespondiert. Die Korrektureinheit 85, 85' stellt den ausgewählten mindestens einen Korrekturwert 86.1 bis 86.N, 86.1' bis 86.N' der Systemsteuereinheit 10, 110, 10', 110' zur Verfügung, die den mindestens einen Korrekturwert 86.1 bis 86.N, 86.1' bis 86.N' bei der Abarbeitung einer Positionierungsfunktion zur Korrektur der erfassten mindestens einen Abweichung 62.1 bis 62.N, 62.1' bis 62.N' der Systemgeometrie berücksichtigt.

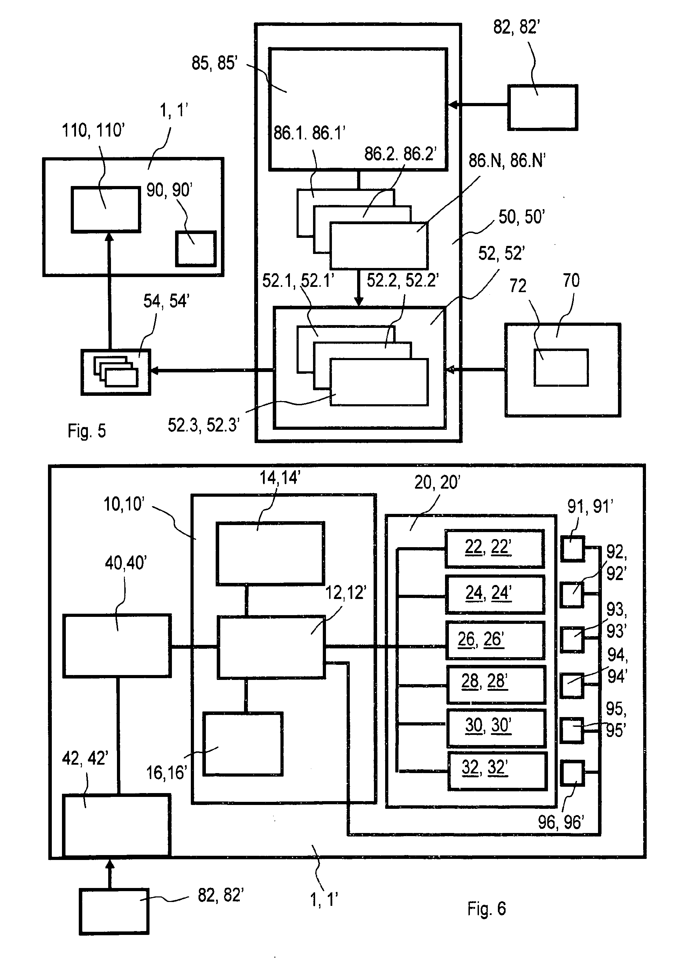

Die Temperatur des jeweiligen Positionierungssystems 1, 1' kann beispielsweise aus mehreren Teiltemperaturen zusammensetzt werden, die jeweils in einem zugeordneten Bereich des jeweiligen Positionierungssystems 1 bzw. 1' erfasst werden. Zur Erfassung der verschiedenen Teiltemperaturen können anstelle der Sensoreinheit 90, 90' mehrere Sensoreinheiten 91 bis 96, 91' bis 96' vorhanden sein, siehe Fig. 6. Daher können aus der bei mindestens einer Temperatur erfassten mindestens einen Abweichung 62.1 bis 62.N, 62.1' bis 62.N' der Systemgeometrie 20, 20' des Positionierungssystems 1, 1' beispielsweise bereichsweise zugeordnete Temperaturkennfelder erzeugt und gespeichert werden, so dass der mindestens eine Korrekturwert 86.1 bis 86.N, 86.1' bis 86.N' für das gesamte Positionierungssystem 1, 1' aus mehreren Bereichstemperaturkennfeldern berechnet wird, die mit der aktuell erfassten Temperatur korrespondieren. Alternativ kann aus den in mindestens einem Bereich des Positionierungssystems 1, 1' erfassten mehreren Temperaturen ein Temperaturdurchschnittswert berechnet und als Temperatur des Positionierungssystems 1, 1' verwendet werden.

Im Ausführungsbeispiel gemäß Fig. 4 ist die Korrektureinheit 85, 85' als eigenständige Baugruppe dargestellt. Bei alternativen nicht dargestellten Ausführungsformen kann die Korrektureinheit 85, 85' mit der Auswerte- und Steuereinheit 80, 80' zu einer Baugruppe zusammengefasst werden.

Wie aus Fig. 5 ersichtlich ist, kann eine Konvertiervorrichtung 50, 50' in einem Verarbeitungsblock 52, 52 den basierend auf einer vorgegebenen Temperatur und dem gespeicherten mindestens einen Referenzabweichungskennfeld 82.1', 82.1, 82.2, 82.3 und dem ermittelten temperaturabhängigen Verhalten erzeugten mindestens einen Korrekturwert 86.1 bis 86.N, 86.1' bis 86.N' für die Systemgeometrie 20, 20' des Positionierungssystems 1, 1' gezielt in einen Steuercode mindestens eines bereits erstellten Programms 72 einarbeiten und mindestens ein modifiziertes systemspezifisches Programm 52.1, 52.2, 52.3, 52.1', 52.2', 52.3' erzeugen und beispielsweise in einer Speichereinheit 54, 54' speichern, wobei vorzugsweise in Abhängigkeit von mehreren vorgegebenen Temperaturen mehrere modifizierte systemspezifische Programme 52.1, 52.2, 52.3, 52.1', 52.2', 52.3' erzeugt und gespeichert werden. Jedes der mehreren modifizierten systemspezifischen Programme 52.1, 52.2, 52.3, 52.1', 52.2', 52.3' wird dann genau einer Temperatur zugeordnet. Vor dem Betrieb des Positionierungssystems 1, 1' wird dann eine aktuelle Temperatur ermittelt, und ein mit der aktuellen Temperatur am Besten korrespondierendes modifiziertes systemspezifisches Programm 52.1, 52.2, 52.3, 52.1', 52.2', 52.3' wird aktiviert und von der Systemsteuereinheit 110, 110' des Positionierungssystems 1, 1' abgearbeitet. Die Auswahl des entsprechenden modifizierten systemspezifischen Programms 52.1, 52.2, 52.3, 52.1', 52.2', 52.3' kann automatisch erfolgen oder von einem Benutzer vorgegebenen werden.

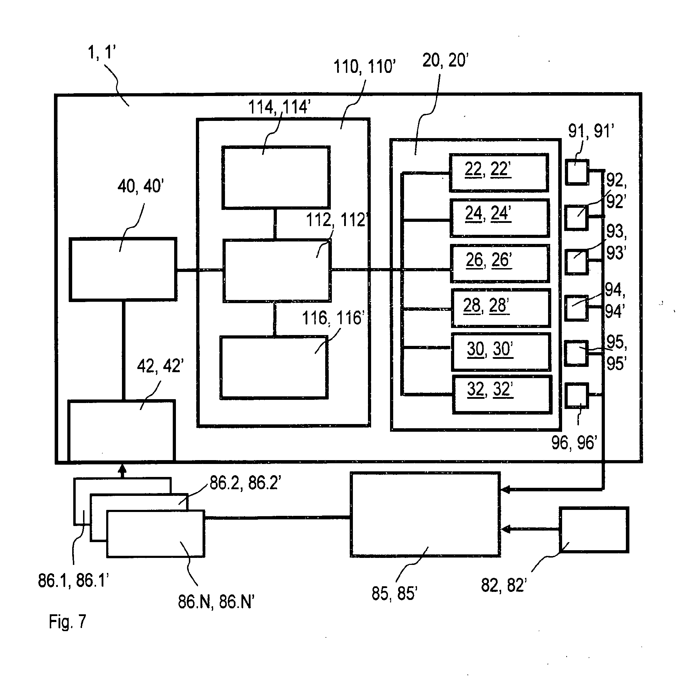

Fig. 6 und 7 zeigen jeweils ein Ausführungsbeispiel eines Positionierungssystems 1 bzw. 1', das beispielsweise als Teil eines Messsystems und/oder einer Werkzeugmaschine und/oder eines Handhabungsgerätes und/oder eines Bestückungssystems und/oder eines Roboters aufgeführt werden kann. Wie aus Fig. 6 und 7 ersichtlich ist, umfasst das Positionierungssystem 1, 1' eine Systemsteuereinheit 10, 10' bzw. 110, 110', die eine Auswerte- und Steuereinheit 12, 12' bzw. 112, 112', einen Systemdatenspeicher 14, 14' bzw. 114, 114' und einen Arbeitsspeicher 16, 16' bzw. 116, 116' aufweist, einen Programmspeicher 40, 40', eine Schnittstelleneinheit 42, 42', mehrere translatorische Positionierungsachsen 22, 22' 24, 24', 26, 26', mehrere drehende Positionierungsachsen 28, 28', 30, 30', 32, 32' und mehrere Sensoreinheiten 91 bis 96, 91' bis 96' zur bereichsweisen Erfassung von mehreren Teiltemperaturen, aus denen die Temperatur des Positionierungssystems 1 bzw. 1' ermittelt wird, wobei die translatorischen Positionierungsachsen 22, 22' 24, 24', 26, 26', und die drehenden Positionierungsachsen 28, 28', 30, 30', 32, 32' gemeinsam eine Systemgeometrie 20, 20' des Positionierungssystems 1, 1' bestimmen. Als Bezugssystem verwendet das dargestellte Ausführungsbeispiel des Positionierungssystems 1, 1' ein kartesisches Koordinatensystem mit drei zu einander senkrecht verlaufenden Bezugsachsen x, y, z. Der Unterschied zwischen der ersten Ausführungsform gemäß Fig. 6 und der zweiten Ausführungsform gemäß Fig. 7 besteht darin, dass die Funktionalität der Korrektureinheit 85, 85' zur Erzeugung des mindestens einen Korrekturwerts 86.1 bis 86.N, 86.1' bis 86.N' bzw. die Korrektureinheit 85, 85' bei der ersten Ausführungsform gemäß Fig. 6 direkt in die Systemsteuereinheit 10, 10' des Positionierungssystems 1 bzw. 1' implementiert ist. Daher werden der Systemsteuereinheit 10, 10' des Positionierungssystems 1 bzw. 1' das mindestens eine Referenzabweichungskennfeld 82.1, 82.2, 82.3, 82.1' und das Temperaturkennfeld 81 über die Speichereinheit 82, 82' und die Schnittstelleneinheit 42, 42' zur Verfügung gestellt. Der Speicherinhalt kann in den Programmspeicher 40, 40' und/oder in den Systemdatenspeicher 14, 14' übertragen werden. Bei der zweiten Ausführungsform gemäß Fig. 7 ist die Korrektureinheit 85, 85' zur Erzeugung des mindestens einen Korrekturwerts 86.1 bis 86.N, 86.1' bis 86.N' als eigenständige Baugruppe ausgeführt, die der Systemsteuereinheit 110, 110' den mindestens einen Korrekturwert 86.1 bis 86.N, 86.1' bis 86.N' über die Schnittstelleneinheit 42, 42' zur Verfügung stellt. Der mindestens eine Korrekturwert 86.1 bis 86.N, 86.1' bis 86.N' kann in den Programmspeicher 40, 40' und/oder in den Systemdatenspeicher 114, 114' übertragen werden.

Im Programmspeicher 40, 40' ist mindestens ein Programm für mindestens eine Positionierungsfunktion gespeichert, wobei die Auswerte- und Steuereinheit 12, 12' bzw. 112, 112' ein gespeichertes Programm aus dem Programmspeicher 40, 40' zur Abarbeitung in den Arbeitsspeicher 16, 16' bzw. 116, 116' lädt. Im Systemdatenspeicher 14, 14' bzw. 114, 114' sind systemspezifische Informationen gespeichert, die von der Auswerte- und Steuereinheit 12, 12' bzw. 112, 112' bei der Abarbeitung des in den Arbeitsspeicher 16, 16' bzw. 116, 116' geladenen Programms angefordert werden. Bei den im Programmspeicher 40, 40' gespeicherten Programmen handelt es sich beispielsweise um systemspezifische Programme 52.1, 52.2, 52.3, 52.1', 52.2', 52.3' die von der Konvertiervorrichtung 50, 50' durch Einarbeiten des mindestens einen Korrekturwerts 86.1 bis 86.N, 86.1' bis 86.N' in Steuercodes von bereits mit einer Programmiervorrichtung 70 erstellten Programmen 72 erzeugt werden und dem Positionierungssystem 1 bzw. 1' zur Verfügung gestellt werden.

Der mindestens eine Korrekturwert 86.1 bis 86.N, 86.1' bis 86.N' wird von der Korrektureinheit 85, 85 speziell für das vorgegebene Positionierungssystem 1 bzw. 1' ermittelt. Wie oben bereits ausgeführt ist, erfassen die Messmittel 60 bzw. 60' zur Ermittlung des mindestens einen Korrekturwerts 86.1 bis 86.N, 86.1' bis 86.N' die mindestens eine Abweichung 62.1 bis 62.N, 62.1' bis 62.N', insbesondere eine systematische Abweichung, der Systemgeometrie 20, 20' des Positionierungssystems 1 bzw. 1', wobei die Messmittel 60 bzw. 60' zur Erfassung der mindestens einen Abweichung 62.1 bis 62.N, 62.1' bis 62.N' beispielsweise ein Laserinterferometer mit speziellen Optionen, Stufenendmasse, geometrische Normale, Kugelplatten und/oder spezielle Laser-Tracer usw. umfassen.

Im dargestellten Ausführungsbeispiel des Positionierungssystems 1 bzw. 1' wird die Systemgeometrie 20, 20', wie oben bereits ausgeführt ist, durch die drei translatorischen Positionierungsachsen 22, 22' 24, 24', 26, 26' und die drei drehenden Positionierungsachsen 28, 28', 30, 30', 32, 32' bestimmt. Die mindestens eine von der Auswerte- und Steuereinheit 12, 12', bzw. 112' mit der Systemgeometrie des Positionierungssystems 1 bzw. 1' abgearbeitete Positionierungsfunktion führt durch eine entsprechende Ansteuerung der drei translatorischen Positionierungsachsen 22, 22' 24, 24', 26, 26' und/oder der drei drehende Positionierungsachsen 28, 28', 30, 30', 32, 32' innerhalb des vorgegebenen Bezugssystems eine translatorische und/oder drehende Positionierungsbewegung mit mindestens einem zu positionierenden Element aus. Das mindestens eine zu positionierenden Element ist in Abhängigkeit von der Anwendung des Positionierungssystems 1 bzw. 1' als Werkzeug und/oder Werkstück und/oder Messwertaufnehmer und/oder Prüfling und/oder Bestückungseinheit und/oder zu bestückende Einheit und/oder Aufnehmerelement und/oder Ablegerelement ausgeführt.

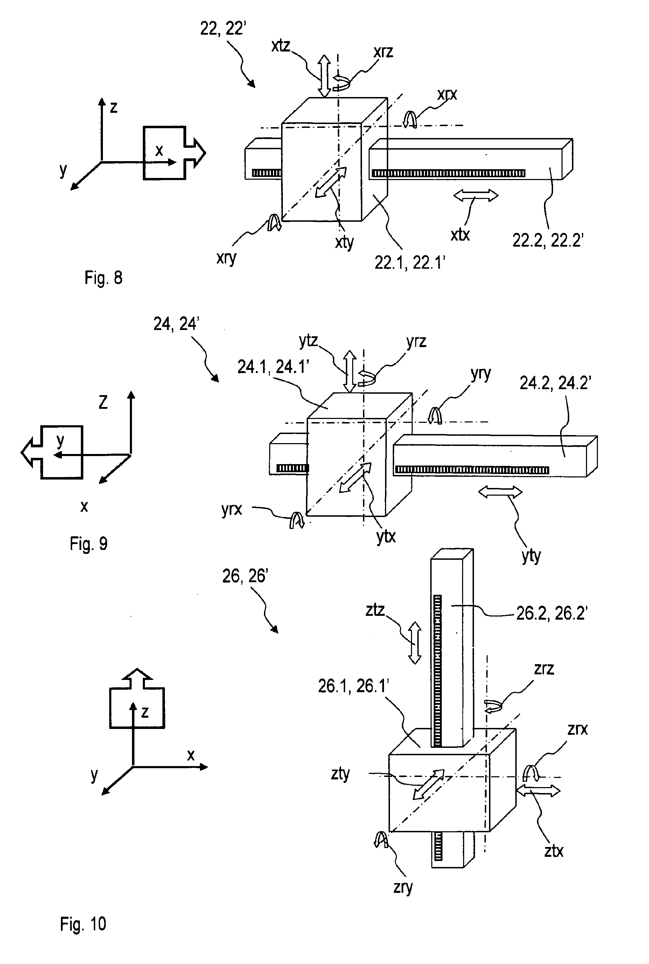

Wie aus Fig. 8 bis 10 ersichtlich ist, umfasst im dargestellten Ausführungsbeispiel eine erste translatorische Positionierungsachse 22, 22' einen angetriebenen ersten Schlitten 22.1, 22.1' der durch eine erste Führungsschiene 22.2, 22.2' zur Ausführung einer Translation in eine positive oder negative x-Richtung geführt ist. Eine zweite translatorische Positionierungsachse 24, 24' umfasst einen angetriebenen zweiten Schlitten 24.1, 24.1' der durch eine zweite Führungsschiene 24.2, 24.2' zur Ausführung einer Translation in eine positive oder negative y-Richtung geführt ist. Eine dritte translatorische Positionierungsachse 26, 26' umfasst einen angetriebenen dritten Schlitten 26.1, 26.1', der durch eine dritte Führungsschiene 26.2, 26.2' zur Ausführung einer Translation in eine positive oder negative z-Richtung geführt ist.

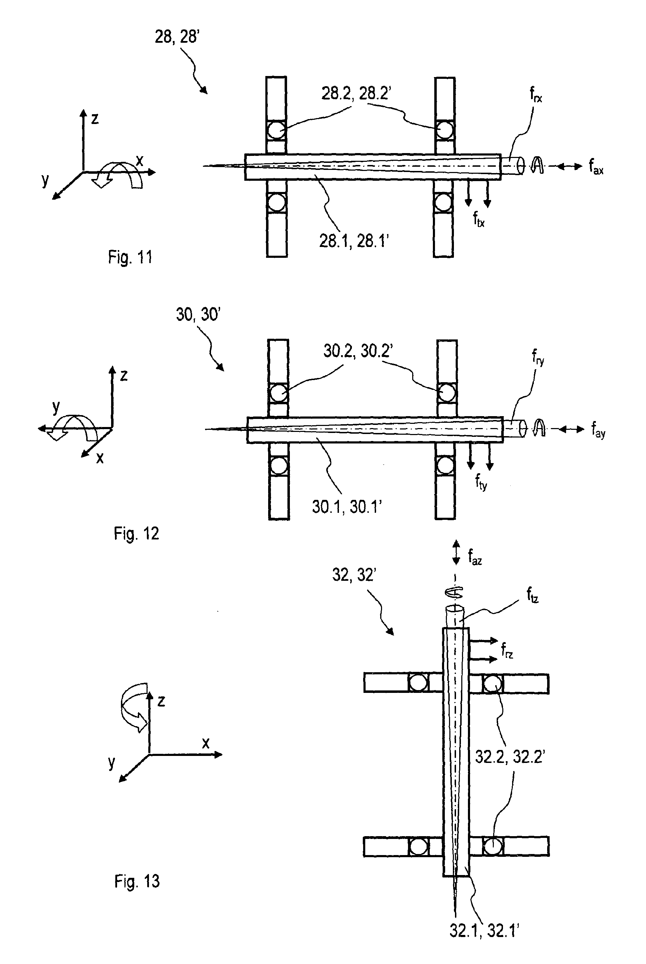

Wie aus Fig. 11 bis 13 ersichtlich ist, umfasst im dargestellten Ausführungsbeispiel eine erste drehende Positionierungsachse 28, 28.1' eine angetriebene erste Drehwelle 28.1, 28.1', die bei der Ausführung einer Drehbewegung um eine erste Bezugsachse x durch eine entsprechende erste Lagerung 28.2, 28.2' geführt ist. Eine zweite drehende Positionierungsachse 30, 30' umfasst eine angetriebene zweite Drehwelle 30.1, 30.1', die bei der Ausführung einer Drehbewegung um eine zweite Bezugsachse y durch eine entsprechende zweite Lagerung 30.2, 30.2' geführt ist. Eine dritte drehende Positionierungsachse 32, 32' umfasst eine angetriebene dritte Drehwelle 32.1, 32.1', die bei der Ausführung einer Drehbewegung um eine dritte Bezugsachse y durch eine entsprechende dritte Lagerung 32.2, 32.2' geführt ist.

Zur Ermittlung des mindestens einen Korrekturwerts 86.1 bis 86.N, 86.1' bis 86.N' für das Positionierungssystem 1 bzw. 1' gemäß Fig. 6 bzw. 7 erfassen die Messmittel 60 bzw. 60' die Abweichungen 62.1 bis 62.N, 62.1' bis 62.N' bzw. Fehlerparameter für die drei translatorischen Positionierungsachsen 22, 22', 24, 24', 26, 26', wobei die Abweichungen der translatorischen Positionierungsachsen 22, 22', 24, 24', 26, 26' jeweils translatorische Abweichungen bzw. Fehlerparameter xtx, xty, xtz, ytx, yty, ytz, ztx, zty, ztz in die drei Bezugsrichtungen x, y, z und/oder jeweils rotatorische Abweichungen bzw. Fehlerparameter xrx, xry, xrz, yrx, yry, yrz, zrx, zry, zrz um die drei Bezugsichtungen x, y, z umfassen.

Wie aus Fig. 8 bis 10 ersichtlich ist, ergeben sich für das kartesische Bezugskoordinatensystem für jede der drei translatorischen Positionierungsachsen 22, 22' 24, 24', 26, 26' jeweils sechs Abweichungen bzw. Fehlerparameter.

Zusätzlich zu diesen Fehlerparametern können bei dem Positionierungssystem 1, 1' mit drei translatorischen Positionierungsachsen 22, 22' 24, 24', 26, 26' in einer "Portal-Bauart" drei Rechtwinkligkeitsabweichungen von jeweils zwei der drei translatorischen Positionierungsachsen 22, 22' 24, 24', 26, 26' zueinander auftreten, so dass sich insgesamt 21 Fehlerparameter ergeben können.

Zusätzlich zu diesen Fehlerparametern können bei einem Positionierungssystem 1, 1' mit drei translatorischen Positionierungsachsen 22, 22' 24, 24', 26, 26' in einer "Horizontalarm-Bauart" drei weitere "elastische" Fehler auftreten, die durch eine horizontal auskragende Positionierungsachse, z.B. der zweiten Positionierungsachse, des Systemständers verursacht werden, so dass sich insgesamt 24 Fehlerparameter ergeben können.

Zur Ermittlung des mindestens einen Korrekturwerts 86.1 bis 86.N, 86.1' bis 86.N' für das Positionierungssystem 1 bzw. 1' gemäß Fig. 6 bzw. 7 erfassen die Messmittel 60 bzw. 60' die Abweichungen 62.1 bis 62.N, 62.1' bis 62.N' bzw. Fehlerparameter für die drei drehenden Positionierungsachsen 28, 28', 30, 30', 32, 32', wobei die Abweichungen der drei drehenden Positionierungsachsen 28, 30, 32 jeweils eine Radialabweichung frx, fry, frz, eine Axialabweichung fax, fay, faz und/oder eine Taumelabweichung ftx, fty, ftz umfassen. Wie aus Fig. 11 bis 13 ersichtlich ist, ergeben sich für das kartesische Bezugskoordinatensystem für jede der drei drehenden Positionierungsachsen 28, 28', 30, 30', 32, 32' jeweils drei Fehlerparameter. Für eine Korrektur der Fehlerparameter von den drehenden Positionierungsachsen 28, 28', 30, 30', 32, 32' ist zusätzlich eine Ermittlung der Position der drehenden Positionierungsachsen 28, 28', 30, 30', 32, 32' innerhalb eines Bezugskoordinatensystems erforderlich. Die Positionen der jeweiligen drehenden Positionierungsachse 28, 28', 30, 30', 32, 32' in einem kartesischen Bezugskoordinatensystem, die auch von den Messmitteln 60 bzw. 60' erfasst werden, können z. B. durch zwei Koordinaten und zwei projizierte Winkel eindeutig beschrieben werden. Zusätzlich kann eine in Fig. 11 bis 13 nicht dargestellte Winkelmessabweichung Pw auftreten, wenn die drehenden Positionierungsachsen 28, 28', 30, 30', 32, 32' jeweils mit einem Winkelmeßsystem ausgerüstet sind.

Am Beispiel einer Positioniereinrichtung in Portalbauart mit drei translatorischen Positionierungsachsen 22, 22' 24, 24', 26, 26' ermitteln die Messmittel 60 bzw. 60', wie oben bereits ausgeführt ist, für jede der translatorischen Positionierungsachsen 22, 22' 24, 24', 26, 26' die zugehörigen translatorischen und rotatorischen Abweichungen xtx, xty, xtz, ytx, yty, ytz, ztx, zty, ztz, xrx, xry, xrz, yrx, yry, yrz, zrx, zry, zrz. Die jeweiligen Lageabweichungen einer der translatorischen Positionierungsachse 22, 22' 24, 24', 26, 26' lassen sich durch drei achsparallele Verschiebungen eines Achspunktes und durch drei Drehwinkel beschreiben. Zusätzlich ergeben sich die drei Rechtwinkligkeitsabweichungen xwy, xwz, ywz der translatorischen Positionierungsachsen 22, 22' 24, 24', 26, 26' zueinander. Somit können in diesem Ausführungsbeispiel die Abweichungen für alle Freiheitsgrade der Systemgeometrie 20, 20' als "Vollfehleraufnahme" ermittelt werden. Anschließend berechnet die Korrektureinheit 85, 85 die Korrekturwerte 86.1 bis 86.N, 86.1' bis 86.N' für das Positionierungssystem 1 bzw. 1' und stellt die berechneten Korrekturwerte 86.1 bis 86.N, 86.1' bis 86.N' beispielsweise als Korrekturmatrix zur Verfügung, die in Tabelle 1 dargestellt ist.

Tabelle 1 zeigt beispielsweise Abweichungen bzw. Korrekturen für ein kartesisches Koordinatenmessgerät in Portal-Bauart mit 3 Achsen. Wie aus Tabelle 1 ersichtlich ist, werden bei der Ermittlung der Korrekturwerte Offsetlängen für "auskragende" Werkzeuge bzw. Taster berücksichtigt, wobei x_{T} eine Offsetlänge in x-Richtung bezeichnet, y_{T} bezeichnet eine Offsetlänge in y-Richtung und Z_{T} bezeichnet eine Offsetlänge in z-Richtung.

**Tabelle 1**

| Achse | Abweichung (Korrektur) | Korrekturfaktor | | |
|---|---|---|---|---|
| | | X_{R} | Y_{R} | Z_{R} |
| | ywz | | -z | |
| | xwz | -z | | |
| | xwy | -y | | |
| Y | ytx | 1 | | |
| | yty | | 1 | |
| | ytz | | | 1 |
| | yrx | | -z-z_{T} | y_{T} |
| | yry | Z+Z_{T} | | |
| | yrz | -y_{T} | x+x_{T} | -x-x_{T} |
| X | xtx | 1 | | |
| | xty | | 1 | |
| | xtz | | | 1 |
| | xrx | | -z-z_{T} | y_{T} |
| | xry | z+z_{T} | | |
| | xrz | -y_{T} | x_{T} | |
| Z | ztx | 1 | | |
| | zty | | 1 | |
| | ztz | | | 1 |
| | zrx | | -z_{T} | y_{T} |
| | zry | z_{T} | | |
| | zrz | -y_{T} | x_{T} | |

x, y, z sind die Koordinaten des Systems, X repräsentiert die erste translatorische Positionierungsachse 22, 22', Y repräsentiert die zweite translatorische Positionierungsachse 24, 24', Z repräsentiert die dritte translatorische Positionierungsachse 26, 26', x_{T}, y_{T} und z_{T} sind die Offsetlängen.

Wie aus Tabelle 1 ersichtlich ist, ergibt sich beispielsweise für eine Korrektur Ky des y-Wertes auf Grund des rotatorischen Fehlers yrx: Ky = yrx*(-z - z_{T}).

Die verschiedenen Fehlerparameter sind in der nicht vorveröffentlichten Patentanmeldung DE 10 2007 004 971.6 der Anmelderin ausführlich beschrieben, deren Offenbarung hiermit durch Bezugnahme in die Beschreibung aufgenommen wird.

Das erfindungsgemäße Korrekturverfahren für ein Positionierungssystem 1 bzw. 1' verbessert durch die Kompensation von temperaturbedingten Abweichungen in vorteilhafter Weise die Genauigkeit der Systemgeometrie 20, 20' der translatorischen Positionierungsachsen 22, 22' 24, 24', 26, 26' und/oder der drehenden Positionierungsachsen 28, 28', 30, 30', 32, 32' und deren Winkellage zueinander.

Das mindestens eine modifizierte systemspezifische Programm 52.1, 52.2, 52.3 entspricht der Syntax des Standardsteuercodes für die entsprechende Systemsteuereinheit 110, 110'. Das erfindungsgemäße Korrekturverfahren kann durch die Veränderung des Programmsteuercodes unabhängig vom Typ der Systemsteuereinheit 110, 110' und der Softwareversion des Programmsteuercodes universell eingesetzt werden.

## Patentansprüche

1. Verfahren zur Korrektur eines Positionierungssystems, das mindestens ein Programm für mindestens eine Positionierungsfunktion abarbeitet, **dadurch gekennzeichnet, dass**
- für ein Positionierungssystem (1, 1') mindestens eine Abweichung (62.1 bis 62.N, 62.1' bis 62.N') der Systemgeometrie (20, 20'), insbesondere eine systematische Abweichung, bei mindestens einer Temperatur erfasst wird,
- basierend auf der mindestens einen erfassten Abweichung (62.1 bis 62.N, 62.1' bis 62.N') und der mindestens einen Temperatur mindestens ein Referenzabweichungskennfeld (82.1', 82.1, 82.2, 82.3) erzeugt wird, das dem Positionierungssystem (1, 1') zugeordnet und gespeichert wird,
- und für die mindestens eine erfasste Abweichung (62.1 bis 62.N, 62.1' bis 62.N') der Systemgeometrie (20, 20') des Positionierungssystems ein temperaturabhängiges Verhalten ermittelt und gespeichert wird,
- wobei für den bestimmungsgemäßen Betrieb des Positionierungssystems (1, 1') basierend auf mindestens einer vorgegebenen und/oder aktuell erfassten Temperatur und dem gespeicherten mindestens einen Referenzabweichungskennfeld (82.1', 82.1, 82.2, 82.3) und dem ermittelten temperaturabhängigen Verhalten mindestens ein Korrekturwert (86.1 bis 86.N, 86.1' bis 86.N') ermittelt wird, der bei der Abarbeitung einer Positionierungsfunktion zur Korrektur der erfassten mindestens einen Abweichung (62.1 bis 62.N, 62.1' bis 62.N') der Systemgeometrie (20, 20') berücksichtigt wird.

2. Verfahren nach Anspruch 1,
**dadurch gekennzeichnet,**
**dass** der mindestens eine Korrekturwert (86.1 bis 86.N, 86.1' bis 86.N') basierend auf einer aktuell erfassten Temperatur während des bestimmungsgemäßen Betriebs des Positionierungssystems (1, 1') oder vor dem bestimmungsgemäßen Betrieb des Positionierungssystems (1, 1') ermittelt wird.

3. Verfahren nach Anspruch 1 oder 2,
**dadurch gekennzeichnet, dass** der mindestens eine Korrekturwert (86.1 bis 86.N, 86.1' bis 86.N') für mehrere vorgegebene Temperaturen ermittelt wird, wobei der mindestens eine Korrekturwert (86.1 bis 86.N, 86.1' bis 86.N') der jeweiligen vorgegebenen Temperatur zugeordnet und gespeichert wird, und wobei vor dem Betrieb des Positionierungssystems (1, 1') eine aktuelle Temperatur ermittelt wird, und mindestens ein mit der ermittelten aktuellen Temperatur korrespondierender Korrekturwert (86.1 bis 86.N, 86.1' bis 86.N') ausgewählt und bei der Abarbeitung einer Positionierungsfunktion zur Korrektur der erfassten mindestens einen Abweichung (62.1 bis 62.N, 62.1' bis 62.N') der Systemgeometrie (20, 20') berücksichtigt wird.

4. Verfahren nach einem der Ansprüche 1 bis 3,
**dadurch gekennzeichnet,**
**dass** das temperaturabhängige Verhalten der Systemgeometrie (20) des Positionierungssystems (1) aus einem Temperaturkennfeld (81) abgeleitet wird, welches Temperaturinformationen und Abweichungsinformationen aufweist, die miteinander kombiniert sind.

5. Verfahren nach Anspruch 4,
**dadurch gekennzeichnet,**
**dass** das Temperaturkennfeld (81) mehrere Referenzabweichungskennfelder (82.1, 82.2, 82.3) umfasst, die jeweils Informationen über eine Temperatur und Informationen über die bei dieser Temperatur erfasste mindestens eine Abweichung (62.1 bis 62.N) der Systemgeometrie (20) des Positionierungssystems (1) aufweisen.

6. Verfahren nach Anspruch 4 oder 5,
**dadurch gekennzeichnet,**
**dass** das Temperaturkennfeld (81) mehrere Differenzabweichungskennfelder (83.1, 83.2, 83.3) umfasst, die jeweils Informationen über eine Temperatur und Informationen über eine dieser Temperatur zugeordnete temperaturabhängige Differenzabweichung der erfassten mindestens einen Abweichung (62.1 bis 62.N) aufweisen, wobei die mehreren Differenzabweichungskennfelder (83.1, 83.2, 83.3) jeweils aus den mehreren Referenzabweichungskennfeldern (82.1, 82.2, 82.3) berechnet werden.

7. Verfahren nach einem der Ansprüche 4 bis 6,
**dadurch gekennzeichnet,**
**dass** das Temperaturkennfeld (81) ein Temperaturkennlinienfeld (84) umfasst, das die Informationen über einen temperaturabhängigen Verlauf für die mindestens eine erfasste Abweichung (62.1 bis 62.N) aufweist.

8. Verfahren nach einem der Ansprüche 5 bis 7,
**dadurch gekennzeichnet,**
**dass** die Informationen über einen temperaturabhängigen Verlauf für die mindestens eine erfasste Abweichung (62.1 bis 62.N) durch eine Extrapolation und/oder Interpolation eines zugehörigen ersten Abweichungswerts aus einem ersten Referenzabweichungskennfeld, der bei einer ersten Temperatur erfasst wird, und/oder eines zugehörigen zweiten Abweichungswerts aus einem zweiten Referenzabweichungskennfeld berechnet wird, der bei einer zweiten Temperatur erfasst wird.

9. Verfahren nach einem der Ansprüche 5 bis 7,
**dadurch gekennzeichnet,**
**dass** die Informationen über einen temperaturabhängigen Verlauf für die mindestens eine erfasste Abweichung (62.1 bis 62.N) durch eine Extrapolation und/oder Interpolation eines zugehörigen ersten Differenzabweichungswerts aus einem ersten Differenzabweichungskennfeld, der einer erfassten ersten Temperatur zugeordnet ist, und/oder eines zweiten zugehörigen Differenzabweichungswert aus einem zweiten Differenzabweichungskennfeld berechnet wird, der einer erfassten zweiten Temperatur zugeordnet ist.

10. Verfahren nach Anspruch 8 oder 9,
**dadurch gekennzeichnet,**
**dass** die Informationen über einen temperaturabhängigen Verlauf für die mindestens eine erfasste Abweichung (62.1 bis 62.N) durch eine lineare Interpolation zwischen dem zugehörigen ersten Abweichungswert bzw. Differenzabweichungswert und/oder dem zugehörigen zweiten Abweichungswert bzw. Differenzabweichungswert berechnet wird, oder durch eine Splinefunktion interpoliert wird, die als Stützstellen den zugehörigen ersten Abweichungswert bzw. Differenzabweichungswert und/oder den zugehörigen zweiten Abweichungswert bzw. Differenzabweichungswert verwendet.

11. Verfahren nach Anspruch 8 oder 9,
**dadurch gekennzeichnet,**
**dass** die Informationen über einen temperaturabhängigen Verlauf für die mindestens eine erfasste Abweichung (62.1 bis 62.N), die nur aus einem bei einer Temperatur erfassten zugehörigen Abweichungswert bzw. Differenzabweichungswert extrapoliert wird, aus einem Verlauf einer Abweichungsfunktion ausgehend von dem zugehörigen Abweichungswert bzw. Differenzabweichungswert abgeschätzt wird, wobei zur Abschätzung des Verlaufs der Abweichungsfunktion bekannte Materialeigenschaften des Positionierungssystems und/oder Stützstellen verwendet werden.

12. Verfahren nach einem der Ansprüche 4 bis 11,
**dadurch gekennzeichnet,**
**dass** das Temperaturkennfeld (81) für ein erstes Positionierungssystem (1) einer beliebigen Bauart ermittelt wird und auf ein zweites Positionierungssystem (1') der gleichen Bauart übertragen wird, wobei der mindestens eine Korrekturwert (86.1' bis 86.N') für die Korrektur der mindestens einen Abweichung (62.1' bis 62.N') der Systemgeometrie (20') des zweiten Positionierungssystems (1') für den bestimmungsgemäßen Betrieb basierend auf dem mindestens einen Referenzabweichungskennfeld (82.1'), das für das zweite Positionierungssystem (1') erzeugt wurde, und auf dem Temperaturkennfeld (81) berechnet wird, das für das erste Positionierungssystem (1) ermittelt wurde.

13. Verfahren nach Anspruch 12,
**dadurch gekennzeichnet,**
**dass** das temperaturabhängige Verhalten der Systemgeometrie (20') des zweiten Positionierungssystems (1') zur Ermittlung des mindestens einen Korrekturwerts (86.1' bis 86.N') zur Korrektur der mindestens einen Abweichung (62.1' bis 62.N') der Systemgeometrie (20) des zweiten Positionierungssystems (1') basierend auf dem Temperaturkennfeld (81) des ersten Positionierungssystems (1) gemäß einem der Ansprüche 8 bis 11 ermittelt wird.

14. Verfahren nach einem der Ansprüche 1 bis 13,
**dadurch gekennzeichnet,**
**dass** sich eine Temperatur aus mehreren Teiltemperaturen zusammensetzt, die jeweils in einem zugeordneten Bereich des Positionierungssystems (1, 1') erfasst werden, wobei aus der bei mindestens einer Temperatur erfassten mindestens einen Abweichung (62.1 bis 62.N, 62.1' bis 62.N') der Systemgeometrie (20, 20') des Positionierungssystems (1, 1') bereichsweise zugeordnete Temperaturkennfelder erzeugt und gespeichert werden, so dass der mindestens eine mit der aktuell erfassten Temperatur korrespondierende Korrekturwert (86.1 bis 86.N, 86.1' bis 86.N') für das gesamte Positionierungssystem (1, 1') aus mehreren Bereichstemperaturkennfeldern berechnet wird.

15. Verfahren nach einem der Ansprüche 1 bis 14,
**dadurch gekennzeichnet, dass** der basierend auf einer vorgegebenen Temperatur und dem gespeicherten mindestens einen Referenzabweichungskennfeld (82.1', 82.1, 82.2, 82.3) und dem ermittelten temperaturabhängigen Verhalten erzeugte mindestens eine Korrekturwert (86.1 bis 86.N, 86.1' bis 86.N') für die Systemgeometrie (20) des Positionierungssystems (1, 1') gezielt in einen Steuercode mindestens eines bereits erstellten Programms (72) eingearbeitet wird und mindestens ein modifiziertes systemspezifisches Programm (52.1, 52.2, 52.3, 52.1', 52.2', 52.3') erzeugt und gespeichert wird.

16. Verfahren nach Anspruch 15,
**dadurch gekennzeichnet, dass** in Abhängigkeit von mehreren vorgegebenen Temperaturen mehrere modifizierte systemspezifische Programme (52.1, 52.2, 52.3, 52.1', 52.2', 52.3') erzeugt und gespeichert werden, wobei jedes der mehreren modifizierten systemspezifischen Programme (52.1, 52.2, 52.3, 52.1', 52.2', 52.3') genau einer Temperatur zugeordnet wird, wobei vor dem Betrieb des Positionierungssystems (1, 1') eine aktuelle Temperatur ermittelt wird, und ein mit der aktuellen Temperatur korrespondierendes modifiziertes systemspezifisches Programm (52.1, 52.2, 52.3, 52.1', 52.2', 52.3') aktiviert und abgearbeitet wird.

17. Vorrichtung zur Korrektur eines Positionierungssystems, insbesondere zur Durchführung des Verfahrens nach einem der Ansprüche 1 bis 16, das eine Systemsteuereinheit (10, 10') und einen Programmspeicher (40, 40') umfasst, in dem mindestens ein Programm für mindestens eine Positionierungsfunktion speicherbar ist, wobei die Systemsteuereinheit (10, 110, 10', 110') das mindestens eine gespeicherte Programm zur Abarbeitung in einen Arbeitsspeicher (16, 116, 16', 116') lädt,
**gekennzeichnet durch**
- Messmittel (60, 60'), die ausgeführt sind, um mindestens eine Abweichung (62.1 bis 62.N, 62.1' bis 62.N') der Systemgeometrie (20, 20'), insbesondere eine systematische Abweichung, bei mindestens einer Temperatur zu erfassen,
- mindestens eine Sensoreinheit (90 bis 96, 90' bis 96'), die ausgeführt ist, um mindestens einen Parameter zur Bestimmung einer aktuellen Temperatur zu erfassen,
- eine Auswerte- und Steuereinheit (80, 80'), die ausgeführt ist, um aus der mindestens einen bei mindestens einer Temperatur erfassten Abweichung (62.1 bis 62.N, 62.1' bis 62.N') mindestens ein Referenzabweichungskennfeld (82.1', 82.1, 82.2, 82.3) zu erzeugen, das erzeugt Referenzabweichungskennfeld (82.1', 82.1, 82.2, 82.3) dem Positionierungssystem (1, 1') zuzuordnen und zu speichern, und
- eine Korrektureinheit (85, 85'), die ausgeführt ist, um für den bestimmungsgemäßen Betrieb des Positionierungssystems (1, 1') basierend auf mindestens einer vorgegebenen und/oder aktuell erfassten Temperatur und dem gespeicherten mindestens einen Referenzabweichungskennfeld (82.1', 82.1, 82.2, 82.3) und einem ermittelten temperaturabhängigen Verhalten der mindestens einen Abweichung (62.1 bis 62.N, 62.1' bis 62.N') mindestens einen Korrekturwert (86.1 bis 86.N, 86.1' bis 86.N') zu ermitteln, den die Systemsteuereinheit (10, 110, 10', 110') bei der Abarbeitung einer Positionierungsfunktion zur Korrektur der mindestens einen Abweichung der Systemgeometrie (20, 20') des Positionierungssystems (1, 1') berücksichtigt.

18. Vorrichtung nach Anspruch 17,
**dadurch gekennzeichnet,**
**dass** die Auswerte- und Steuereinheit (80) und/oder die Korrektureinheit (85) ein Temperaturkennfeld (81) für ein erstes Positionierungssystem (1) einer bestimmten Bauart ermitteln, wobei das ermittelte Temperaturkennfeld (81) auf ein zweites Positionierungssystem (1') der gleichen Bauart übertragbar ist, wobei die Korrektureinheit (85') den mindestens einen Korrekturwert (86.1' bis 86.N') für die Korrektur der mindestens einen Abweichung (62.1' bis 62.N') der Systemgeometrie (20') des zweiten Positionierungssystem (1') für den bestimmungsgemäßen Betrieb basierend auf dem mindestens einen Referenzabweichungskennfeld (82.1'), das für das zweite Positionierungssystem (1') erzeugt wurde, und auf dem Temperaturkennfeld (81) berechnet, das für das erste Positionierungssystem (1) ermittelt wurde.

19. Vorrichtung nach Anspruch 17 oder 18,
**dadurch gekennzeichnet, dass** eine Konvertiervorrichtung (50, 50') den basierend auf einer vorgegebenen Temperatur und dem gespeicherten mindestens einen Referenzabweichungskennfeld (82.1', 82.1, 82.2, 82.3) und dem ermittelten temperaturabhängigen Verhalten erzeugten mindestens einen Korrekturwert (86.1 bis 86.N, 86.1' bis 86.N') für die Systemgeometrie (20, 20') des Positionierungssystems (1, 1') gezielt in einen Steuercode mindestens eines bereits erstellten Programms (72) einarbeitet und mindestens ein modifiziertes systemspezifisches Programm (52.1, 52.2, 52.3, 52.1', 52.2', 52.3') erzeugt und speichert, das die Systemsteuereinheit (10, 110, 10', 110') abarbeitet.

20. Vorrichtung nach einem der Ansprüche 17 bis 19,
**dadurch gekennzeichnet,**
**dass** das Positionierungssystem (1, 1') mindestens eine Positionierungsfunktion ausführt, die eine translatorische und/oder drehende Positionierungsbewegung mit mindestens einem zu positionierenden Element über mindestens eine translatorische Positionierungsachse (22, 22' 24, 24', 26, 26') und/oder mindestens eine drehende Positionierungsachse (28, 28', 30, 30', 32, 32') innerhalb eines vorgegebenen Bezugssystems umfasst.
